# EUROPÄISCHE PATENTSCHRIFT

(11) **EP 2 483 043 B1**
(45) Veröffentlichungstag und Bekanntmachung des Hinweises auf die Patenterteilung: **13.07.2016**
(21) Anmeldenummer: 10744596.7
(22) Anmeldetag: 20.08.2010
(51) Int. Cl.: B29B 7/38, B29B 7/94, B29B 7/84, B29C 47/38, B29C 47/60, B29C 47/92, B29C 47/10

(54) **VERFAHREN ZUR EINFÄRBUNG VON KUNSTSTOFFFORMMASSEN**
METHOD FOR COLORING PLASTIC MOLDING MATERIALS
PROCÉDÉ POUR LA COLORATION DE PRODUITS MOULABLES EN MATIÈRE PLASTIQUE

(30) Priorität: 29.09.2009 DE 102009045122
(43) Veröffentlichungstag der Anmeldung: 08.08.2012
(73) Patentinhaber: Evonik Röhm GmbH, 64293 Darmstadt (DE)
(72) Erfinder: KLUGE, Andreas, 63179 Obertshausen (DE); BECHT, Simon, 61194 Niddatal-Assenheim (DE); GOLDACKER, Thorsten, 64380 Roßdorf (DE); WICK, Thomas, 68592 Flörsheim-Dalsheim (DE); JUCYS, Michael, 64853 Otzberg (DE); GOLCHERT, Ursula, 64807 Dieburg (DE); SCHULTES, Klaus, 65193 Wiesbaden (DE)
(86) Internationale Anmeldenummer: PCT/EP2010/062156
(87) Internationale Veröffentlichungsnummer: WO 2011/038990

(56) Entgegenhaltungen:
- EP-A1- 0 603 605
- EP-A1- 0 691 351
- EP-A1- 2 255 947
- EP-A2- 1 847 373
- WO-A1-2005/040254
- WO-A1-2009/037118
- CH-A- 353 340
- DE-A1- 2 417 792
- DE-A1- 4 142 576
- DE-A1-102008 009 735
- JP-A- 2001 179 808
- US-A- 3 754 734
- US-A- 3 917 507
- US-A- 5 236 645
- US-B1- 6 649 122

## Beschreibung

Die vorliegende Erfindung betrifft ein Verfahren zur Herstellung von eingefärbten Kunststoffformmassen. Des Weiteren wird eine Anlage zur Durchführung dieses Verfahrens beschrieben.

Kunststoffformmassen werden seit langem mit Farbmitteln eingefärbt. Üblicherweise werden hierfür verschiedene Verfahren mit jeweils unterschiedlichen Vor- und Nachteilen eingesetzt.

Beispielsweise können feste Farbstoffe zum einzufärbenden Kunststoff hinzugefügt werden. Nachteilig ist hierbei jedoch, dass diese Pigmente nur sehr schwer gleichmäßig im Kunststoff dipergiert werden können, ohne dass der Kunststoff einer langzeitigen Compoundierung unterzogen wird, die jedoch zu einem Abbau der Polymere und der damit verbundenen mechanischen Eigenschaften derselben führen kann.

Dementsprechend werden vielfach vorgefärbte Kunststoffe, so genannte Masterbatches verwendet, die die einzusetzenden Farbstoffe, insbesondere Pigmente in konzentrierter Form aufweisen. Allerdings können die einzusetzenden Trägerkunststoffe zu einem Abbau der mechanischen Eigenschaften der zu färbenden Kunststoffe führen.
Weiterhin ist der Einsatz von diesen vorgefärbten Kunststoffen häufig relativ teuer, da die Herstellung dieser Kunststoffe eine lange Compoundierung erfordert, um eine gleichmäßige Verteilung des Farbstoffes zu erzielen.

Darüber hinaus können auch organische Lösungsmittel eingesetzt werden, um eine gute Verteilung der Farbstoffe im zu färbenden Kunststoff zu erzielen. Allerdings verbleiben relativ große Mengen dieser organischen Lösungsmittel im eingefärbten Kunststoff. Hierdurch werden vielfach die mechanischen Eigenschaften der Kunststoffe nachteilig beeinflusst. So nimmt insbesondere die Kerbschlagzähigkeit ab. Darüber hinaus nimmt die Neigung zur Bildung von Spannungsrissen zu, falls die aus der Formmasse erhältlichen Formkörper mit organischen Lösungsmitteln in Berührung kommen. Weiterhin können Reste an organischen Lösungsmitteln in Formmassen bei der Weiterverarbeitung, beispielsweise bei Spritzgussverfahren zu einer Bildung von Belägen führen.

Aus den oben genannten Gründen wurden Versuche unternommen, Färbemittel auf Wasserbasis einzusetzen.

Beispielsweise beschreibt die Druckschrift US 6,649,122 eine Flüssigfarbe auf Wasserbasis, die etwa 10 bis etwa 80% Farbmittel, bis zu 30% Dispergiermittel und 25 bis 90% Wasser umfasst. Zur Färbung von Kunststoffgranulat wird vorzugsweise die Oberfläche desselben mit der beschriebenen Flüssigfarbe auf Wasserbasis benetzt, wonach das im Färbemittel enthaltene Wasser entfernt wird. Es findet dementsprechend vorzugsweise eine Vorbehandlung des Kunststoffgranulats mit dem Färbemittel statt, wobei das Wasser entfernt wird, bevor das mit Farbmittel versetzte Kunststoffgranulat in den Extruder gegeben wird. Zwar wird in Beispiel 2 dieser Druckschrift dargelegt, dass die erhaltene Mischung auch ohne den zuvor beschriebenen Vormischschritt in den Einzugsbereich des Extruders gegeben
werden kann. Gemäß dieser Druckschrift wird hierdurch jedoch vielfach ein aufgeschäumtes Extrudat erhalten. Dementsprechend rät diese Druckschrift von einer unmittelbaren Zugabe der Flüssigfarbe auf Wasserbasis in den Extruder ab.

Nachteilig an der in dem Dokument US 6,649,122 als bevorzugt dargelegten Vorgehensweise ist insbesondere der mit dem Vormischen verbundene Energieaufwand. Weiterhin besteht zur Durchführung dieses als bevorzugt dargelegten Verfahrens ein erhöhter Investitionsbedarf. Ferner wird in beiden zuvor dargelegten Varianten der Extruder vollständig mit Farbmittel benetzt. Dies führt zu einem hohen Aufwand, falls ein Farbwechsel vorgenommen werden soll. In diesem Zusammenhang ist auf den Ausschuss zu verweisen, der durch die große Menge an Kunststoffformmasse mit einer Farbe außerhalb der Spezifikationen gegeben ist, falls die Anlage ohne Auseinanderbau des Extruders umgestellt wird. Falls die Anlage zur Reinigung zerlegt wird, so kann während dieser Zeit keine eingefärbte Kunststoffformmasse hergestellt werden. Dementsprechend ist neben dem Aufwand für die Zerlegung auch der Pröduktionsausfall mit zu berücksichtigen.

In Dokument US 5,236,645. wird ein Verfahren beschrieben, bei dem mindestens ein Additiv (u.a. auch Farbstoffe) in einem wässrigen, ein' Dispergiermittel enthaltenden Vehikel in eine thermoplastische Schmelze eingeführt wird, indem es einem Entgasungsextruder zugeführt wird, in dem der Thermoplast extrudiert wird, gefolgt von dem Verdampfen eines wässrigen Teiles des wässrigen additiven Stromes und dem Entfernen nahezu aller flüchtigen wässrigen Anteile durch eine Entlüftungsöffnung, so dass ein im Wesentlichen homogenes System, enthaltend den Thermoplasten und das mindestens eine Additiv erhalten wird.

Ein ähnliches Verfahren wir in dem Dokument EP 1847373 A2 beschrieben.

Dokument EP 0603605 A1 offenbart ein Verfahren zur Einfärbung eines thermoplastischen Materials, bei dem das thermoplastische Material mit einer wässrigen Farbstoff-Dispersion, enthaltend optional Netzmittel, gemischt wird. Die Mischung wird geschmolzen und bei einer ausreichend hohen Temperatur für eine ausreichend lange Zeit gehalten, so dass eine wesentliche Verdampfung des Lösungsmittels erfolgt.

In US 3,754,734 wird ein Verfahren zur Einfärbung von Heißschmelz-Polymeren beschrieben, bei dem eine direkte Injektion eines Farbstoffes in den Polymer-Strom während der Polymerisation erfolgt.

In Anbetracht des Standes der Technik war es nun Aufgabe der vorliegenden Erfindung, ein Verfahren zur Herstellung von eingefärbten Kunststoffformmassen bereitzustellen, mit dem gefärbte Kunststoffformmassen besonders kostengünstig erhalten werden können. Insbesondere sollte das Verfahren besonders schnelle und einfache Farbwechsel ermöglichen, ohne dass die Anlage zerlegt werden muss oder eine große Menge an Ausschuss anfällt.

Darüber hinaus war es Aufgabe der vorliegenden Erfindung, Verfahren zur Herstellung von eingefärbten Kunststoffformmassen zur Verfügung zu stellen, die zu qualitativ hochwertigen Kunststoffen führen. Hierbei sollten die Kunststoffe hervorragende mechanische Eigenschaften, insbesondere eine hohe Kerbschlagzähigkeit oder eine hohe Vicat-Erweichungstemperatur zeigen. Ferner sollte das Einfärben mit einem möglichst geringen Abbau der Polymere verbunden sein. Weiterhin sollten die eingefärbten Kunststoffe eine sehr gleichmäßige Farbe aufweisen, wobei die Reproduzierbarkeit der Einfärbung möglichst hoch sein sollte. Darüber hinaus sollten die eingefärbten Kunststoffformmassen nicht zu einer Bildung von Belägen bei einer Verarbeitung, insbesondere bei Spritzgussverfahren neigen.

Eine weitere Aufgabe bestand darin, eine Anlage zur Durchführung des vorliegenden Verfahrens zu schaffen, die eine möglichst konstante, hohe Produktqualität zur Verfügung stellt. Weiterhin sollte die Anlage über einen langen Zeitraum betrieben werden können, ohne dass aufwendige Wartungsarbeiten notwendig sind.

Weiterhin sollte das Verfahren einfach und kostengünstig durchgeführt werden können, ohne dass hiermit eine Gefährdung der Umwelt verbunden ist.

Gelöst werden diese sowie weitere nicht explizit genannte Aufgaben, die jedoch aus den hierin einleitend diskutierten Zusammenhängen ohne Weiteres ableitbar oder erschließbar sind, durch ein Verfahren mit allen Merkmalen des Patentanspruchs 1. Zweckmäßige Abwandlungen des erfindungsgemäßen Verfahrens werden in den auf Anspruch 1 rückbezogenen abhängigen Ansprüchen unter Schutz gestellt.

Gegenstand der vorliegenden Erfindung ist dementsprechend ein Verfahren zur Herstellung von eingefärbten Kunststoffformmassen mit wasserhaltigen Flüssigfarben entsprechend Anspruch 1.

Hierdurch gelingt es auf nicht vorhersehbare Weise ein Verfahren zur Herstellung von eingefärbten Kunststoffformmassen bereitzustellen, mit dem gefärbte Kunststoffformmassen besonders kostengünstig erhalten werden. Insbesondere ermöglicht das Verfahren besonders schnelle und einfache Farbwechsel, ohne dass die Anlage zerlegt werden muss oder eine große Menge an Ausschuss anfällt.

Darüber hinaus führt das erfindungsgemäße Verfahren zur Herstellung von qualitativ hochwertigen, eingefärbten Kunststoffen. Hierbei zeigen die Kunststoffe beispielsweise hervorragende mechanische Eigenschaften, die insbesondere durch eine hohe Kerbschlagzähigkeit oder eine hohe Vicat-Erweichungstemperatur sichtbar werden. Überraschend gelingt durch das erfindungsgemäße Verfahren die Herstellung von eingefärbten Kunststoffen, ohne dass hierdurch ein wesentlicher Abbau der Polymere verbunden ist. Weiterhin weisen die eingefärbten Kunststoffe eine sehr gleichmäßige Farbe auf, wobei die Reproduzierbarkeit der Einfärbung sehr hoch ist. Ferner zeigen die eingefärbten Kunststoffformmassen eine äußerst geringe Neigung zur Bildung von Belägen bei der Weiterverarbeitung, insbesondere bei Spritzgussverfahren.

Weiterhin kann das Verfahren einfach und kostengünstig durchgeführt werden, ohne dass hiermit eine Gefährdung der Umwelt verbunden ist.

Weiterhin wird eine Anlage zur Durchführung des Verfahrens beschrieben, die eine überraschend konstante, hohe Produktqualität zur Verfügung stellt. Ferner kann die Anlage über einen langen Zeitraum betrieben werden, ohne dass aufwendige Wartungsarbeiten notwendig sind.

Formmassen, die gemäß dem vorliegenden Verfahren eingefärbt werden können, sind an sich bekannt, wobei diese Formmassen als obligatorische Komponente thermoplastisch verarbeitbare Polymere enthalten. Zu den bevorzugten Polymeren gehören beispielsweise Poly(meth)acrylate, insbesondere Polymethylmethacrylat (PMMA), Poly(meth)acrylimide, Polyacrylnitrile, Polystyrole, Polyether, Polyester, Polycarbonate, Polyvinylchloride. Hierbei sind Poly(meth)acrylate und Poly(meth)acrylimide bevorzugt. Diese Polymere können einzeln sowie als Mischung eingesetzt werden. Des Weiteren können diese Polymere auch in Form von Copolymeren vorliegen. Bevorzugte Copolymere sind unter anderem Styrol-Acrylnitril-Copolymere, Styrol-MaleinsäureCopolymere und Polymethylmethacrylat-Copolymere, insbesondere Polymethylmethacrylat-Poly(meth)acrylimid-Copolymere.

Gemäß einem besonderen Aspekt der vorliegenden Erfindung können Formmassen eingefärbt werden, die Polycarbonate enthalten. Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern durch Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Gemäß einer besonderen Ausführungsform der vorliegenden Erfindung können Formmassen eingefärbt werden, die mindestens 20 Gew.-%, bevorzugt mindestens 40 Gew.-% und ganz besonders bevorzugt mindestens 80 Gew.-% Polycarbonate enthalten.

Gemäß einer weiteren Ausführungsform der vorliegenden Erfindung weisen besonders bevorzugte Formmassen mindestens 15 Gew.-%, vorzugsweise mindestens 50 Gew.-% und besonders bevorzugt mindestens 80 Gew.-% Polymethylmethacrylat, Polymethacrylimid und/oder Polymethylmethacrylat-Copolymere auf, bezogen auf das gesamte Gewicht der Formmasse.

Die Formmassen, die gemäß der vorliegenden Erfindung eingefärbt werden können, können bevorzugt Poly(meth)acrylate enthalten. Der Ausdruck (Meth)acrylate umfasst Methacrylate und Acrylate sowie Mischungen aus beiden.

Poly(meth)acrylate sind Polymere, die durch Polymerisation einer Monomerenmischung erhältlich sind, die mindestens 60 Gew.-%, bevorzugt mindestens 80 Gew.-% (Meth)acrylate aufweist, bezogen auf das Gewicht der Monomeren. Diese Monomere sind in der Fachwelt weithin bekannt und kommerziell erhältlich.
Zu diesen gehören unter anderem (Meth)acrylsäure und (Meth)acrylate, die sich von gesättigten Alkoholen ableiten, wie Methyl(meth)acrylat, Ethyl(meth)acrylat, Propyl(meth)acrylat, Butyl(meth)acrylat, Pentyl(meth)acrylat, Hexyl(meth)acrylat, 2-Ethylhexyl(meth)acrylat, Heptyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.; Amide und Nitrile der (Meth)acrylsäure, wie N-(3-Dimethylaminopropyl)(meth)acrylamid, N-(Diethylphosphono)(meth)acrylamid, 1-Methacryloylamido-2-meth-yl-2-propanol; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl (meth)-acrylat, 3,4-Dihydroxybutyl(meth)acrylat, 2-Hydroxyethyl(meth)acrylat, 2-Hydroxypropyl(meth)-acrylat; Glycoldi(meth)acrylate, wie 1,4-Butandiol(meth),acrylat, (Meth)acrylate von Etheralkoholen, wie Tetrahydrofurfuryl(meth)acrylat, Vinyloxyethoxyethyl(meth)acrylat; und mehrwertige (Meth)acrylate, wie Trimethyloylpropantri(meth)acrylat.

Neben den zuvor dargelegten (Meth)acrylaten können zur Herstellung der Poly(meth)acrylate auch weitere ungesättigte Monomere eingesetzt werden, die mit den zuvor genannten Methacrylaten copolymerisierbar sind. Im allgemeinen werden diese Verbindungen in einer Menge von 0 bis 40 Gew.-%, vorzugsweise 0 bis 20 Gew.-%, bezogen auf das Gewicht der Monomeren, eingesetzt, wobei die Comonomere einzeln oder als Mischung verwendet werden können. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Vinylester, wie Vinylacetat; Styrolmonomere, wie zum Beispiel Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-10-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und
Diene, wie beispielsweise Divinylbenzol.

Bevorzugte Poly(meth)acrylate sind durch Polymerisation von Mischungen erhältlich, die mindestens 20 Gew.-%, insbesondere mindestens 60 Gew.-% und besonders bevorzugt mindestens 80 Gew.-%, jeweils bezogen auf das Gesamtgewicht der zu polymerisierenden Monomere, Methylmethacrylat aufweisen. Diese Polymere werden im Rahmen der vorliegenden Erfindung als Polymethylmethacrylate bezeichnet. Bevorzugte Formmassen können verschiedene Poly(meth)acrylate enthalten, die sich beispielsweise im Molekulargewicht oder in der Monomerzusammensetzung unterscheiden.

Die Herstellung der (Meth)acrylat-Homo- und/oder Copolymere aus den zuvor dargelegten Monomeren nach den verschiedenen Verfahren der radikalischen Polymerisation ist an sich bekannt. So können die Polymere in Substanz-, Lösungs-, Suspensions- oder Emulsionspolymerisation hergestellt werden. Die Substanzpolymerisation ist beispielhaft in Houben-Weyl, Band E20, Teil 2 (1987), S. 1145ff. beschrieben. Wertvolle Hinweise hinsichtlich der Lösungspolymerisation finden sich eben dort auf S. 1156ff. Erläuterungen zur Suspensionspolymerisationstechnik finden sich eben dort auf S. 1149ff., während die Emulsionspolymerisation eben dort auf S. 1150ff. ausgeführt und erläutert wird.

Des Weiteren können bevorzugte Formmassen Poly(meth)acrylimide umfassen. Poly(meth)acrylimide weisen wiederkehrende Einheiten auf, die durch Formel (I) darstellbar sind, 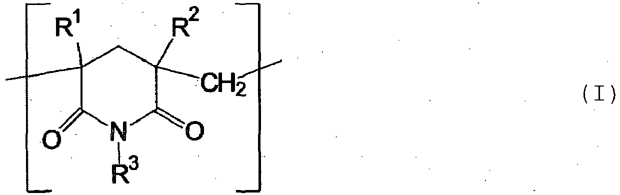 worin R¹ und R² gleich oder verschieden Wasserstoff oder eine Methylgruppe und R³ Wasserstoff oder ein Alkyl- oder Arylrest mit bis zu 20 Kohlenstoffatomen bedeuten.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimids.

Die Herstellung von Poly(meth)acrylimiden ist an sich bekannt und beispielsweise in GB-PS 1 078 425, GB-PS 1 045 229, DE-PS 1 817 156 (= US-PS 3 627 711) oder DE-PS 27 26 259 (= US-PS 4 139 685) offenbart.

Darüber hinaus können diese Copolymerisate weitere Monomereeinheiten enthalten, die sich beispielsweise aus Estern der Acryl- oder Methacrylsäure, insbesondere mit niedrigen Alkoholen mit 1 - 4C-Atomen, Styrol, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen.

Bevorzugt können Formmassen eingesetzt werden, die Poly(N-methylmethacrylimide) (PMMI) und/oder Polymethylmethacrylate (PMMA) umfassen. Poly(N-methylmethacrylimide) (PMMI), Polymethylmethacrylate (PMMA) und/oder PMMI-PMMA-Copolymere sind vorzugsweise Copolymere von PMMI und PMMA, welche durch teilweise Cycloimidisierung des PMMA hergestellt werden. (PMMI, welches durch Teilimidisierung von PMMA hergestellt wird, wird üblicherweise so hergestellt, dass maximal 83 % des eingesetzten PMMA imidisiert werden. Das dabei entstehende Produkt wird als PMMI bezeichnet, ist streng genommen aber ein PMMI-PMMA-Copolymer.) Sowohl PMMA als auch PMMI oder PMMI-PMMA-Copolymere sind kommerziell erhältlich, z. B. unter dem Markennamen PLEXIGLAS oder PLEXIMID der Firma Evonik Röhm. Ein beispielhaftes Copolymer (PLEXIMID 8803) hat 33 % MMI-Einheiten, 54,4 % MMA-Einheiten, 2,6 % Methacrylsäureeinheiten und 1,2 % Anhydrideinheiten. Die Produkte sowie ihre Herstellung sind bekannt (Hans R. Kricheldorf, Handbook of Polymer Synthesis, Part A, Verlag Marcel Dekker Inc. New York - Basel - Hongkong, S. 223 f.; H. G. Elias, Makromoleküle, Hüthig und Wepf Verlag Basel-Heidelberg - New York; US-PSS 2 146 209, 4 246 374).

Darüber hinaus können die Formmassen Styrol-Acrylnitril-Polymere (SAN) umfassen. Besonders bevorzugte Styrol-Acrylnitril-Polymere können durch die Polymerisation von Mischungen erhalten werden, die aus
70 bis 92 Gew.-% Styrol
8 bis 30 Gew.-% Acrylnitril und
0 bis 22 Gew.-% weiterer Comonomere, jeweils bezogen auf das Gesamtgewicht der zu polymerisierenden Monomere, bestehen.

Zur Verbesserung der Schlagzähigkeitswerte können den Formmassen Siliconkautschuk-Pfropfcopolymerisate beigemischt werden, die zusammengesetzt sind aus 0,05 bis 95 Gew.-%, bezogen auf das Gesamtgewicht des Copolymerisats, eines Kerns a) aus einem siliciumorganischen Polymer, das der allgemeinen Formel (R₂SiO_{2/2}) · (RSiO_{3/2})_{y}·(SiO_{4/2})_{z} mit x = 0 bis 99,5 Mol-%, y = 0,5 bis 100 Mol-%, z = 0 bis 50 Mol-% entspricht, wobei R gleiche oder verschiedene Alkyl- oder Alkenyl-Reste mit 1 bis 6C-Atomen, Aryl-Reste oder substituierte Kohlenwasserstoffreste bedeutet, 0 bis 94,5 Gew.-%, bezogen auf das Gesamtgewicht des Copolymerisats, einer Polydialkylsiloxan-Schicht b) und 5 bis 95 Gew.-%, bezogen auf das Gesamtgewicht des Copolymerisats, einer Hülle c) aus organischen Polymeren, der Kern a) vor der Pfropfung Vinylgruppen umfasst und die Hülle c) durch radikalische Polymerisation einer Mischung, die Acrylsäureester und Methacrylate umfasst, erhältlich ist.

Die Formmassen können des weiteren Acrylatkautschuk-Modifier enthalten. Derartige Acrylatkautschuk-Modifier sind an sich bekannt. Es handelt sich hierbei um Copolymerisate, die eine Kern-Hülle-Struktur aufweisen, wobei der Kern und die Hülle einen hohen Anteil an den zuvor beschriebenen (Meth)acrylaten aufweisen.

Bevorzugte Acrylatkautschuk-Modifier weisen hierbei eine Struktur mit zwei Schalen auf, die sich in ihrer Zusammensetzung unterscheiden.

Besonders bevorzugte Acrylatkautschuk-Modifier haben unter anderem folgenden Aufbau:
- Kern:: Polymerisat mit einem Methylmethacrylatanteil von mindestens 90 Gew.-%, bezogen auf das Gewicht des Kerns.
- Schale 1:: Polymerisat mit einem Butylacrylatanteil von mindestens 80 Gew.-%, bezogen auf das Gewicht der ersten Schale.
- Schale 2:: Polymerisat mit einem Methylmethacrylatanteil von mindestens 90 Gew.-%, bezogen auf das Gewicht der zweiten Schale.

Beispielsweise kann ein bevorzugter Acrylatkautschuk-Modifier folgenden Aufbau aufweisen:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacrylat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bei Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Acrylatkautschuk-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Die Herstellung von Schlagzähmodifier ist unter anderem in EP-A 0 113 924, EP-A 0 522 351, EP 0 528 196 A1 EP-A 0 465 049 und EP-A 0 683 028 beschrieben. Die in den Druckschriften EP-A 0 113 924, eingereicht am 31.12.83 beim Europäischen Patentamt mit der Anmeldenummer 83113259.2; EP-A 0 522 351, eingereicht am 26.06.91 beim Europäischen Patentamt mit der Anmeldenummer 92110610.0; EP 0 528 196 A1, eingereicht am 22.07.92 beim Europäischen Patentamt mit der Anmeldenummer 92112513.4; EP-A 0 465 049, eingereicht am 19.06.91 beim Europäischen Patentamt mit der Anmeldenummer 91305555.4; und EP-A 0 683 028, eingereicht am 11.05.95 beim Europäischen Patentamt mit der Anmeldenummer 95107103.4; dargelegten Schlagzähmodifier und Verfahren zu deren Herstellung werden durch Referenz auf diese Druckschriften zu Zwecken der Offenbarung in die vorliegende Anmeldung eingefügt.

Gemäß einem besonderen Aspekt der vorliegenden Erfindung können die zuvor dargelegten Additive in Kombination verwendet werden. Überraschend kann durch die kombinierte Verwendung der zuvor dargelegten Schlagzähmodifier ein hervorragendes Schlagzähigkeitsverhalten bei Raumtemperatur (ca. 23°C) der Formkörper erzielt werden, die aus den Formmassen hergestellt wurden. So bleiben die mechanischen und thermischen Eigenschaften, wie beispielsweise das E-Modul oder die Vicat-Erweichungstemperatur, auf sehr hohem Niveau erhalten. Wird versucht ein ähnliches Kerbschlagzähigkeitsverhalten bei Raumtemperatur nur durch die Verwendung von Acrylatkautschuk-Modifier oder Siliconkautschuk-Pfropfcopolymerisat zu erzielen, so nehmen diese Werte deutlicher ab.

Gemäß einem besonderen Aspekt der vorliegenden Erfindung kann das Gewichtsverhältnis von Siliconkautschuk-Pfropfcopolymerisat zu Acrylatkautschuk-Modifier im Bereich von 1:10 bis 10:1, vorzugsweise von 4:6 bis 6:4 liegen.

Besondere Formmassen bestehen aus
f1) 20 bis 95 Gew.-% Poly(meth)acrylate,
f2) 0 bis 45 Gew.-% Styrol-Acrylnitril-Polymere,
f3) 5 bis 60 Gew.-% Siliconkautschuk-Pfropfcopolymerisate
f4) 0 bis 60 Gew.-% auf Acrylatkautschuk basierende Schlagzähmodifier, jeweils bezogen auf das Gewicht der Komponenten f1 bis f4,
und üblichen Additiven und Zuschlagsstoffen.

Darüber hinaus können die zu polymerisierenden Zusammensetzungen, die erfindungsgemäß einsetzbaren Formmassen, bzw. die hieraus erhältlichen Formkörpern weitere weithin bekannte Additive enthalten. Zu diesen Additiven gehören unter anderem Molekulargewichtsregler, Trennmittel, Antistatika, Antioxidantien, Entformungsmittel, Flammschutzmittel, Schmiermittel, Farbstoffe, Fließverbesserungsmittel, Füllstoffe, Lichtstabilisatoren, Pigmente, Verwitterungsschutzmittel und Weichmacher.

Die Zusatzstoffe werden in üblicher Menge, d. h. bis zu 80 Gew.-%, vorzugsweise bis zu 30 Gew.-%, bezogen auf die Gesamtmasse eingesetzt. Ist die Menge größer als 80 Gew.-%, bezogen auf die Gesamtmasse, so können Eigenschaften der Kunststoffe wie beispielsweise deren Verarbeitbarkeit stark beeinträchtigt werden.

Das Gewichtsmittel des Molekulargewichts M_{w} der erfindungsgemäß in den Kunststoffformmassen zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im Allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll. Das Molekulargewicht kann mittels Gelpermeationschromatographie (GPC) gegen einen PMMA-Standard bestimmt werden.

Bevorzugte Formmassen bzw. hieraus hergestellte Formkörper zeigen ein E-Modul größer oder gleich 1200 MPa, vorzugsweise größer oder gleich 1600 MPa gemäß ISO 527 (bei 1 mm/min). Des Weiteren können erfindungsgemäß eingefärbte Formmassen bzw. hieraus hergestellte Formkörper eine Schlagzähigkeit nach Charpy größer oder gleich 10 kJ / m², vorzugsweise größer oder gleich 15 kJ / m² gemäß ISO179 zeigen.

Darüber hinaus können Kunststoffe mit Zugfestigkeiten größer oder gleich 55, vorzugsweise größer oder gleich 60 gemäß DIN 53 455-1-3 (bei 1 mm/min) erzeugt werden.

Die zuvor dargelegten Formmassen können gemäß einem besonderen Aspekt der vorliegenden Erfindung mit Vorteil durch Verfahren der kontinuierlichen Polymerisation erhalten werden. Derartige Verfahren sind unter anderem in der Offenlegungsschrift DE 44 24 300 A1 dargelegt. Die in der Druckschrift DE 44 24 300 A1, eingereicht am 09.07.1994 beim Deutschen Patentamt unter der Anmeldenummer P 44 24 300.6 dargelegten Verfahren zur Herstellung thermoplastischer Kunststoff-Formmassen werden zu Zwecken der Offenbarung durch Referenz auf diese Druckschrift in die vorliegende Anmeldung eingefügt. In diesen Verfahren werden die Polymere in einem Extruder hergestellt oder aufgearbeitet. Hierbei kann die wasserhaltige Flüssigfarbe nach dem Entfernen von Restmonomeren aus der Reaktionsmischung in den Extruder eingeleitet werden. Überraschend ermöglicht das erfindungsgemäße Verfahren dementsprechend eine einfache und kostengünstige Einfärbung von Kunststoffen, ohne dass diese wiederholt aufgeschmolzen werden müssten. Weiterhin können hierdurch besonders kostengünstig eingefärbte Kunststoffformmassen erhalten werden, da die Herstellung und die Einfärbung innerhalb eines Extruders erfolgen kann. Die hierbei zurückgeführten Monomerströme umfassen überraschend äußerst geringe, vorzugsweise keine Reste an Farbmitteln, so dass eine Farbumstellung ohne aufwendige Reinigungsvorgänge erfolgen kann.

Gemäß einem weiteren Aspekt können die verwendbaren Formmassen mit Vorteil durch Verfahren der Lösungspolymerisation erhalten werden. Der Begriff "Lösungspolymerisation" ist in der Fachwelt weithin bekannt, wobei derartige Verfahren im zuvor dargelegten Stand der Technik beschrieben sind. Hierbei kann die wasserhaltige Flüssigfarbe nach dem Entfernen von Lösungsmittelresten aus der Reaktionsmischung zugegeben werden.

Die zuvor dargelegten Formmassen werden mit einer wasserhaltigen Flüssigfarbe eingefärbt. Wasserhaltige Flüssigfarben sind Färbemittel, die Wasser umfassen. Diese Färbemittel können als Lösung oder Dispersion vorliegen, wobei wässrige Dispersionen bevorzugte wasserhaltige Flüssigfarben darstellen. Der Begriff "Flüssigfarbe" verdeutlicht, dass das Färbemittel bei Normalbedingungen (25°C und 1013 mbar) fließfähig ist. Bevorzugte wasserhaltige Flüssigfarben zeigen eine dynamische Viskosität im Bereich von 0,5 bis 2000 mPas, bevorzugt 10 bis 1500 mPas und ganz besonders bevorzugt 100 bis 600 mPas, gemessen gemäß DIN EN ISO 2555 bei 25°C (Brookfield). Die Viskosität kann einfach über den Wasseranteil und gegebenenfalls die Teilchengröße der Farbpartikel eingestellt werden.

Der Anteil an Wasser in der wasserhaltigen Flüssigfarbe liegt im Bereich von 5 bis 95 Gew.-%, bevorzugt im Bereich von 20 bis 80 Gew.-% und besonders bevorzugt im Bereich von 40 bis 60 Gew.-%.

Derartige Flüssigfarben sind unter anderem in der zuvor dargelegten Druckschrift US 6,649,122 B1, eingereicht beim Amerikanischen Patentamt (USPTO) mit der Anmeldenummer 09/545014 am 07.04.2000, beschrieben.

Neben Wasser umfassen diese Flüssigfarben üblich mindestens ein Farbmittel. Ein Farbmittel ist nach DIN 55943 die Sammelbezeichnung für alle farbgebenden Stoffe. Zu den farbgebenden Stoffen gehören unter anderem lösliche Farbstoffe und anorganische öder organische Pigmente. Diese Farbmittel können einzeln oder als Mischung von zwei oder mehreren eingesetzt werden. So können insbesondere Mischungen organischer Farbpigmente mit löslichen organischen Farbstoffen eingesetzt werden. Weiterhin können Mischungen eingesetzt werden, die anorganische und organische Farbpigmente umfassen. Darüber hinaus können Mischungen verwendet werden, die zusätzlich zu den anorganischen Farbpigmenten lösliche organische Farbstoffe enthalten. Weiterhin sind Mischungen zweckmäßig, die lösliche Farbstoffe und anorganische und organische Pigmente umfassen. Die zuvor dargelegten Farbmittel sind unter anderem in Kirk Orthmer Encyclopedia of Chemical Technology, Third Edition, vol. 19, pp. 1 bis 78 und in Ullmann's Encyclopedia of Industrial Chemistry 5. Auflage auf CD-ROM dargelegt.

Zu den bevorzugten organischen Farbpigmenten gehören unter anderem Azo- und Diazo-Farbstoffe, Phthalocyanine, Perylene, Methine und Anthrachinone.

Beispiele für organische lösliche Farbstoffe sind unter anderem Anthrapyrimidine, Chinophthalon, Perinone oder Monoazofarbstoffe, wie beispielsweise Thermoplastrot^{®} 454, Thermoplast Schwarz X70^{®}, Macrolexgelb^{®} G, Sandoplast^{®} Rot G oder Solvaperm^{®} Rot G,

Bevorzugte anorganische Pigmente sind unter anderem Zinkchromat, Cadmiumsulfid, Chromoxyd, Ultramarin-Pigmente und Metallflitter, ferner BaSO₄ und TiO₂, sowie Ruß (Carbon Black).

Die Menge an Farbmittel kann zwischen 0,1 Gew.-% bis 80 Gew.-%, bevorzugt 0,5 Gew.-% und 50 Gew.-% und ganz besonders bevorzugt im Bereich von 10 Gew.-% bis 40 Gew.-%, bezogen auf das Gesamtgewicht der wasserhaltigen Flüssigfarbe, betragen.

Das Gewichtsverhältnis von Farbmittel zu Wasser kann in einem weiten Bereich liegen, wobei zu hohe Anteile an Farbmitteln zu Problemen bei der Verteilung des Farbmittels in der Kunststoffformmasse und bei der Durchführung des Verfahrens, beispielsweise durch Farbablagerungen in den Ventilen führen können. Zu geringe Anteile an Farbmitteln führen zu hohen Volumina bei der Zuleitung in die Kunststoffformmasse und zu einer relativ hohen Menge an Wasser, die beispielsweise über die Entgasungsstelle aus dem Extruder ausgeleitet werden kann. Im Allgemeinen liegt das Gewichtsverhältnis von Farbmittel zu Wasser im Bereich von 50:1 bis 1:50, bevorzugt 10:1 bis 1:10 und ganz besonders bevorzugt im Bereich von 5:1 bis 1:5

Je nach Farbmittel kann die wasserhaltige Flüssigfarbe ein oder mehrere Dispergiermittel, auch als grenzflächenaktive Stoffe oder Tenside bezeichnet, enthalten. Zu den bevorzugten Dispergiermitteln gehören unter anderem Polyvinylpyrrolidone, die beispielsweise unter der Bezeichnung Sokalan HP50 von BASF erhältlich sind; Polyacrylate mit ionischen Gruppen, wobei insbesondere Alkalimetallsalze dieser Polyacrylate eingesetzt werden können; Lignosulfonate, die insbesondere als Alkalimetall- oder Eisensalze eingesetzt werden können, kondensierte Naphthalinsulfonate und Naphthalinsulfonate, die vorzugsweise in Form von Alkalimetallsalze Verwendung finden können.

Polyacrylate mit ionischen Gruppen sind Polymere, die Einheiten umfassen, die von (Meth)acrylsäure und/oder (Methl)acrylaten abgeleitet sind. Die in den Polyacrylaten enthaltenen ionischen Gruppen können durch eine Verseifung der Estergruppen oder durch Verwendung von Monomeren mit einer Säuregruppe, vorzugsweise (Meth)acrylsäure erhalten werden. Diese Monomere wurden zuvor dargelegt, so dass auf diese Offenbarung verwiesen wird.

Zu den bevorzugten Dispergiermitteln gehören insbesondere nicht-ionische Tenside, wie zum Beispiel Ethylenoxid/Propylenoxid-Copolymere, vorzugsweise Blockcopolymere, günstigerweise mit 8 bis 40 Ethylenoxid- bzw. Propylenoxideinheiten, und Polyacrylate mit hydrophilen Gruppen, insbesondere Polyalkylenglykolen-Gruppen.

Die als Dispergiermittel geeigneten Polyacrylate mit hydrophilen Gruppen umfassen Einheiten, die von (Meth)acrylaten abgeleitet sind. Der Begriff "hydrophile Gruppe" bedeutet, dass diese Gruppe eine Wasserverträglichkeit bewirkt. Hierbei sind insbesondere nichtionische Gruppen zu nennen, die zu einer Hydrophilie führen. Diese Gruppen sind insbesondere von Monomeren abgeleitet, die in Wasser löslich oder dispergierbar sind. Hierzu gehören insbesondere Monomere mit einer oder mehreren Hydroxylgruppen, insbesondere Hydroxylalkyl(meth)acrylate, oder mit Polyalkylenglykolgruppen.

Besonders bevorzugte Polyacrylate, die als Dispergiermittel geeignet sind, umfassen Einheiten, die von Polyolkylenglykolmono(meth)acrylaten abgeleitet sind.

Polyalkylenglykolmono(meth)acrylate sind Monomere, die neben einer (Meth)acrylat-Gruppe einen Polyalkylenglykol-Rest aufweisen. Die Herstellung dieser Monomere ist unter anderem in WO 2006/024538, eingereicht am 02.09.2005 beim Europäischen Patentamt mit der Anmeldenummer PCT/EP2005/009466; und WO 2005/000929, eingereicht am 20.05.2004 beim Amerikanischen Patentamt (USPTO) mit der Anmeldenummer PCT/US2004/015898; dargelegt, wobei zu Zwecken der Offenbarung auf diese Druckschriften verwiesen wird und die darin beschriebenen Polyalkylenglykolmono(meth)acrylate und Verfahren zu deren Herstellung in die vorliegende Anmeldung eingefügt werden. So können Polyalkylenglykolmono(meth)acrylate mit einer Hydroxygruppe durch Umsetzung von (Meth)acrylsäure mit Epoxiden erhalten werden. Weiterhin können Polyalkylenglykolmono(meth)acrylate durch Umesterung von Alkyl(meth)acrylaten mit Alkoxypolyalkylenglykolen, insbesondere Methoxypolyalkylenglykolen erhalten werden.

Das Gewichtsmittel des Molekulargewichts des Polyalkylenglykolmono(meth)acrylats liegt vorzugsweise im Bereich von 500 bis 20000 g/mol, besonders bevorzugt im Bereich 1000 bis 10000 g/mol, gemessen gemäß GPC.

Zu den bevorzugten Polyalkylenglykolen zur Herstellung der Polyalkylenglykolmono(meth)acrylate gehören insbesondere Poly-C₂-C₄-alkylenglykolverbindungen. Unter Poly-C₂-C₄-alkylenglykolverbindungen, die verschiedentlich auch als Poly-C₂-C₄-alkylenoxide oder Poly(oxy-C₂-C₄-alkylen)Verbindungen bezeichnet werden, versteht man oligomere bzw. makromolekulare Polyether mit mehreren, in der Regel wenigstens 3, häufig wenigstens 5 und insbesondere wenigstens 10 und in der Regel nicht mehr als 500, häufig nicht mehr als 400, z. B. 10 bis 300 und insbesondere 10 bis 200 Wiederholungseinheiten, die von C₂-C₄-Alkylenglykolen abgeleitet sind. Diese Verbindungen können linear oder verzweigt sein.

Bevorzugte Polyalkylenglykolmono(meth)acrylate lassen sich durch die allgemeine Formel (II) beschreiben: 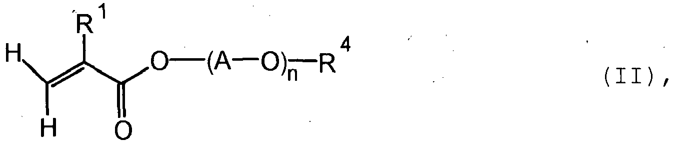 worin n die Anzahl der Wiederholungseinheiten angibt und in der Regel für eine Zahl im Bereich von 3 bis 500, insbesondere im Bereich von 5 bis 400, besonders bevorzugt im Bereich von 10 bis 300 und ganz besonderes bevorzugt im Bereich von 10 bis 200 steht, A für C₂-C₄-Alkylen wie 1,2-Ethandiyl, 1,3-Propandiyl, 1,2-Propandiyl, 1,2-Butandiyl oder 1,4-Butandiyl; R¹ für Wasserstoff oder Methyl und R⁴ für Wasserstoff oder Alkyl mit vorzugsweise 1 bis 10 und insbesondere 1 bis 4 C-Atomen, Phenyl, Benzyl Acyl (= C(O)-Alkyl) mit vorzugsweise 1 bis 10C-Atomen, SO₃H-Gruppen oder PO₃H₂, insbesondere C₁C_{1C}-Alkyl und besonders bevorzugt C₁-C₄-Alkyl und speziell Methyl oder Ethyl steht.

Besonders bevorzugt einsetzbare (Poly-C₂-C₄-alkylenglykol)-mono(meth)acrylsäureester zeichnen sich dadurch aus, dass wenigstens 50 Gew.-%, vorzugsweise wenigstens 70 Gew.-%, insbesondere wenigstens 90 Gew.-% und speziell alle der Wiederholungseinheiten A-O in Formel (II) von Ethylenglykol bzw. von Ethylenoxid abgeleitet sind. Dementsprechend stehen vorzugsweise wenigstens 50 Gew.-%, insbesondere wenigstens 70 Gew.-%, ganz besonders bevorzugt wenigstens 90 Gew.-% und speziell alle der Einheiten A-O in Formel (II) für CH₂-CH₂-O. Gemäß einer weiteren bevorzugten Ausgestaltung der vorliegenden Erfindung können wenigstens 50 Gew.-%, vorzugsweise wenigstens 70.Gew.-%, insbesondere wenigstens 90 Gew.-% und speziell alle der Wiederholungseinheiten in der eingesetzten Poly-C₂-C₄-alkylenglykolverbindung P von Propylenglykol bzw. Propylenoxid abgeleitet sein.

Zu den bevorzugten Polyalkylenglykolmono(meth)acrylaten gehören insbesondere Alkoxypolyalkylenglykolmono(meth)acrylate, die sich durch eine Alkoxygruppe als Rest R in obiger Formel (II) auszeichnen. Hierbei sind insbesondere Methoxypolyethylenglykolmono(meth)acrylate, auch als MPEG-(Meth)acrylate bezeichnet, besonders bevorzugt.

Überraschende Vorteile lassen sich insbesondere durch als Dispergiermittel geeigneten Polyacrylate erzielen, die 0,1 bis 90 Gew.-%, besonders bevorzugt 1 bis 50 Gew.-% und ganz besonders bevorzugt 5 bis 30 Gew.-% Einheiten aufweisen, die von Polyalkylenglykolmono(meth)acrylaten abgeleitet sind, bezogen auf das Gewicht der zur Herstellung der Polyacrylate eingesetzten Monomere.

Neben den zuvor dargelegten Polyalkylenglykolmono(meth)acrylat-Einheiten weisen bevorzugte Polyacrylate Comonomere auf, mit denen weitere gewünschte Eigenschaften erzielt werden können, insbesondere eine hohe Kompatibilität mit den Polymeren, die in den einzufärbenden Kunststoffformmassen enthalten sind. Dementsprechend können diese Polyacrylate Einheiten umfassen, die von Styrolmonomeren, (Meth)acrylaten oder weiteren Comonomeren abgeleitet sind.

Die Herstellung dieser Polyacrylate kann durch Verfahren der radikalischen Polymerisation erfolgen, wobei insbesondere Lösungspolymerisationen, Substanzpolymerisationen oder Emulsionspolymerisationen zu erwähnen sind. Diese sind in Ullmanns's Encyclopedia of Industrial Chemistry, Sixth Edition dargelegt.

Polyacrylate mit Polyalkylenglykolen-Gruppen können beispielsweise unter der Marke EFKA^{®}- 4550 von Ciba Specialty Chemicals kommerziell erhalten werden. Das Polymer besteht im Wesentlichen aus den Monomeren alpha-Methylstyrol, 2-Ethylhexylacrylat und MPEG-Methacrylat.

Bevorzugt kann das Dispergiermittel, vorzugsweise ein mit hydrophilen Gruppen modifiziertes Polyacrylat, in Form einer wässrigen Lösung mit einem Wirksubstanzgehalt zwischen 1 bis 99 Gew.-%, vorzugsweise 20 bis 80 Gew.-% und ganz bevorzugt 48 Gew.-% und 52 Gew.-% eingesetzt werden.

Die Menge an Dispergiermittel, vorzugsweise an Polyacrylat, kann zwischen 1 bis 90 Gew.-%, vorzugsweise 5 Gew.-% und 50 Gew.-% und besonders bevorzugt 5 bis 30 Gew.-%, bezogen auf das Gesamtgewicht der wasserhaltigen Flüssigfarbe betragen.

Das Gewichtsverhältnis von Wasser zu Dispergiermittel kann vorzugsweise im Bereich von 100:1 bis 1:5, besonders bevorzugt 10:1 bis 1:2 und ganz besonders bevorzugt im Bereich von 8:1 bis 2:1liegen.

Das Gewichtsverhältnis von Farbmittel zu Dispergiermittel kann vorzugsweise im Bereich von 100:1 bis 1:5, besonders bevorzugt 10:1 bis 1:1 und ganz besonders bevorzugt im Bereich von 5:1 bis 2:1liegen.

Das zuvor dargelegte Polyacrylat mit hydrophilen Gruppen kann als pH-Wert-unabhängiges Dispergiermittel zur Pigmentdeflokulation in wässrigen Lacksystemen und Pigmentkonzentraten eingesetzt werden.

Eine erfindungsgemäß- einsetzbare Flüssigfarbe kann beispielsweise durch Mischen der Komponenten und anschließendes Dispergieren hergestellt werden.

Gemäß der vorliegenden Erfindung wird eine wasserhaltige Flüssigfarbe zu einer geschmolzenen Kunststoffformmasse gegeben. Der Begriff "geschmolzene Kunststoffformmasse" bezeichnet eine Formmasse, die in thermoplastischem Zustand vorliegt. Dementsprechend weist die Kunststoffformasse eine Temperatur auf, die eine thermoplastische Verarbeitung derselben ermöglicht. Die genaue Temperatur hängt hierbei von dem eingesetzten Kunststoff, insbesondere von der Art und dem Molekulargewicht der Polymeren ab. Vorzugsweise kann die geschmolzene Kunststoffformmasse eine Temperatur im Bereich von 80 °C bis 350°C, bevorzugt 160 bis 330 °C, besonders bevorzugt 190 bis 285 °C aufweisen.

Zur Durchführung des Verfahrens wird ein Extruder verwendet. Unter dem Begriff "Extruder" wird üblich ein Fördergerät verstanden, das nach dem Funktionsprinzip des Schneckenförderers feste bis dickflüssige Massen aus einer Öffnung herauspresst. Derartige Vorrichtungen sind seit langem bekannt und beispielsweise in Chris Rauwendaal: Polymer-Extrusion, Hanser Publishers, Munich Vienna New York, 1986, ISBN 3-446-14196-0, USA: ISBN 0-02-947500-7 beschrieben.

Beispielsweise können Einschnecken- oder Doppelschneckenextruder eingesetzt werden. Die Auswahl und Anpassung geeigneter Extruderschnecken, insbesondere deren Geometrien aufgrund der entsprechenden verfahrenstechnischen Aufgaben, wie z. B. Einziehen, Fördern, Homogenisieren, Aufschmelzen und Komprimieren, gehört dabei zum allgemeinen Wissen des Fachmannes.

Im Einzugsbereich des Schneckenextruders werden vorzugsweise Zylindertemperaturen im Bereich von 50 bis 350°C eingestellt. In den Einzugsbereich können beispielsweise die zuvor dargelegten Formmassen in Form von Granulat zugeführt werden. Gemäß einem besonderen Aspekt der vorliegenden Erfindung kann darüber hinaus auch eine Reaktionsmischung zugegeben werden, die die zu färbenden Polymere umfasst. Üblich enthalten diese Reaktionsmischungen wesentliche Anteile an Monomeren
und/oder Lösungsmittel. Dem Einzugsbereich können Zonen, in denen das Material aufgeschmolzen und homogenisiert wird, nachgeschaltet sein, gefolgt vom Austragsbereich (Düse oder Werkzeug).

Darüber hinaus können der Schmelze vor, während oder nach dem Homogenisieren leicht flüchtige Anteile durch Entgasung bei Normaldruck oder unter Anlegen von Vakuum entzogen werden. Hierbei kann der Extruder ein oder mehrere Entgasungzonen aufweisen. Eine der Entgasungen kann dabei vorzugsweise im Bereich des Homogenisierens oder nach demselben erfolgen.

Die Kunststoffformmasse wird nach einer Entgasungszone mit einer wasserhaltigen Flüssigfarbe versetzt. Falls der Extruder mehrere Entgasungszonen aufweist, wird die Flüssigfarbe nach der letzten Entgasungszone eingeleitet.

Die zur Einleitung der Flüssigfarbe in die Kunststoffschmelze notwendige Flüssigdosierung kann vorzugsweise über ein Ventil erfolgen. Von besonderem Interesse sind insbesondere Anlagen die ein Injektionsventil umfassen, welches ein Zurückdrücken der Schmelze in die Farbzuleitung verhindert. Beispielsweise kann das Ventil einen variablen Ringspalt aufweisen, durch den der Vordruck in der Farbzuleitung geregelt werden kann. Hierbei kann der Druck durch eine in der Zuleitung vorgesehene Pumpe aufrecht erhalten werden. Weiterhin kann das Ventil in Form eines Druckhalteventils ausgebildet sein. Das Ventil kann vorzugsweise so ausgestaltet sein, dass möglichst geringe Toträume entstehen. Dies kann beispielsweise durch ein bündiges Abschließen der Ventilspitze mit der Innenwand des Extrusionszylinders erzielt werden.

Gemäß einem besonderen Aspekt der vorliegenden Erfindung kann die Farbzuleitung, insbesondere im Bereich des Extruders, kühlbar ausgestaltet sein, um eine vorzeitige Verdampfung des in der Farbzusammensetzung enthaltenen Wassers zu verhindern. Dies kann beispielsweise durch bekannte Kühlelemente, wie zum Beispiel Wärmetauscher oder Peltier-Elemente erfolgen.

Die Menge an wässriger Flüssigfarbe, die zur Formmasse gegeben wird, kann über die Förderleistung einer ersten Pumpe geregelt werden, die in der Farbzuleitung vorgesehen ist. Diese Pumpe kann beispielsweise als Zahnradpumpe oder als Kolbenmembranpumpe ausgestaltet sein. Vorzugsweise kann die Förderleistung der Pumpe über einen Massendurchflussmesser geregelt werden, wobei die vorgesehene Menge der gemessenen Menge über die Förderleistung der Pumpe angeglichen wird. Die Förderleistung der Pumpe kann, je nach Ausgestaltung derselben, beispielsweise über die Drehzahl, mit der die Pumpe betrieben wird, eingestellt werden. Der Druck in der Farbzuleitung kann mit einem Drucksensor gemessen und durch Regelung der Pumpe oder, je nach Ausführungsform, durch Variation der Ventilöffnung, beispielsweise des Ringspalts, eingestellt werden.

Überraschende Vorteile bei der Regelung der Menge an wässriger Flüssigfarbe, die zur Formmasse gegeben wird, kann insbesondere durch einen Regelkreis erzielt werden, bei dem der Massenstrom, in Flussrichtung gesehen, vor oder nach der ersten Pumpe gemessen wird. Vorzugsweise kann der Massenstrom mit einem Coriolis-Massendurchflussmesser bestimmt werden.

Eine weitere Verbesserung bezüglich der Präzision, mit der die Menge an wasserhaltiger Flüssigfarbe gesteuert werden kann, kann durch eine zweite Pumpe erzielt werden, mit der die wasserhaltige Flüssigfarbe dem Ansaugbereich der ersten Pumpe zugeführt wird. Hierzu kann beispielsweise eine Membranpumpe eingesetzt werden, die bevorzugt über Druckluft betrieben werden kann. Zwischen den beiden Pumpen können vorzugsweise ein oder mehrere Filter vorgesehen sein, die grobe Farbpartikel zurückhalten. Besondere Vorteile werden durch umschaltbare Filter erzielt, die einen unterbrechungsfreien Betrieb während eines Filterwechsels gewährleisten.

Die Vorrichtungen und Einrichtungen zur Förderung und Dosierung der Massenströme, insbesondere die der geschmolzenen Kunststoffformmasse und der Flüssigfarbe, sind vorzugsweise so ausgestaltet, dass möglichst geringe Schwankungen dieser Masseströme erhalten werden. Vorzugsweise weichen die Massenströme höchstens 10 %, besonders bevorzugt höchstens 5 % von den Mittelwerten ab.

Den zu verarbeitenden Formmassen können weitere flüssige Additive über eine oder mehrere weitere separate Flüssigkeitsdosierungen zugegeben werden. Falls gewünscht können feste Additive entweder gelöst oder suspendiert oder über eine zusätzliche Feststoffdosiervorrichtung, die sich vorzugsweise entweder in der Aufgabezone oder einer der nach der Aufgabezone folgenden Zonen befindet, zugegeben werden. Für die Zugabe fester Additive kann eine seitlich angebrachte Schneckendosierung vorgesehen sein.

Eine optionale Homogenisierung der Schmelze kann vorzugsweise durch die Verwendung von Knetblöcken erfolgen. Im Aufschmelz- und Homogenisierungsbereich werden vorzugsweise Temperaturprofile im Bereich von 160 bis 330 °C, besonders bevorzugt 190 bis 285 °C, eingestellt. Im Austragsbereich liegen die Temperaturen vorzugsweise im Bereich von 220 bis 300 °C. Bei der Durchführung des erfindungsgemäßen Verfahrens wird hinsichtlich der Einstellung der Heizzonen des Extruders besonders bevorzugt ein ansteigendes Temperaturprofil von der Aufgabezone bis zum Werkzeug verwendet. Das verwendete Temperaturprofil variiert dabei in Abhängigkeit vom eingesetzten Polymer.

So liegen die maximalen Zylindertemperaturen im Homogenisierungsbereich des Extruders, bei Polymethylmethacrylat zwischen 220 und 285°C und bei Polymermethacrylimid zwischen 250 und 330°C. Die angegebenen Temperaturen beziehen sich hierbei auf Zylindertemperaturen und können mittels eines Thermoelements, z. Bsp. FeCuNi Typ L oder Typ J, eines PT 100 Thermometer oder eines IR-Thermometers gemessen werden.

Der Extruder kann weitere Einbauten umfassen, um beispielsweise eine Homogenisierung nach dem Einleiten der wässrigen Flüssigfarbe zu verbessern. So können unter anderem statische Mischer oder Homogenisierungszonen nach der Einspeisungsstelle vorgesehen sein. Ausgedehnte Zonen führen jedoch bei einem Farbwechsel zu einem erhöhten Ausschuss.

Gemäß einem besonderen Aspekt der vorliegenden Erfindung kann der Extruder, in der Flüssrichtung gesehen, nach der Einspeisungsstelle für die wasserhaltige Flüssigfarbe ein Schmelzefilter vorgesehen sein, der Verunreinigungen zurückhält. Überraschend zeigt eine derartige Schmelzefilter die Wirkung eines statischen Mischers. Die Maschenweite des Filtereinsatzes kann z. B. 5 bis 300 µm, bevorzugt z. B. 10 bis 150 µm betragen.

Durch den Einsatz entsprechender Werkzeuge, wie z. B. Flachdüsen, Ringdüsen oder Profil-Werkzeugen, ist es möglich, mit dem erfindungsgemäßen Verfahren direkt Formkörper herzustellen. Auf diese Weise lassen sich Formkörper, wie z. B. Flachfolien, Platten, Profile oder andere Formkörper herstellen. Die Formkörper werden nach dem Verlassen des Extruderwerkzeuges nach dem Fachmann bekannten Verfahren abgekühlt. Bevorzugt ist die Herstellung von Granulaten. Die hergestellten Granulate können in nach geschalteten Aggregaten zu Spritzgussartikeln und Extrusionsprodukten unterschiedlicher Dicke weiterverarbeitet werden.

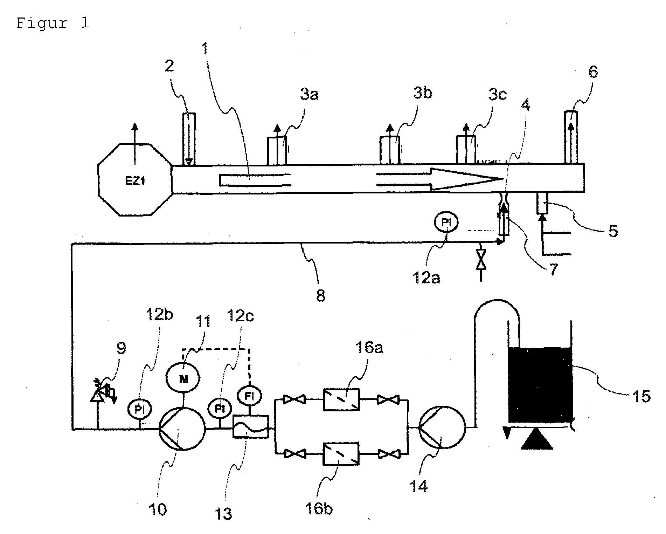

Eine besonders bevorzugte Anlage zur Durchführung des erfindungsgemäßen Verfahrens wird darüber hinaus anhand der beigefügten Figur 1 näher erläutert.

Figur 1 ist eine schematische Darstellung einer bevorzugten, zur Herstellung von eingefärbten Kunststoffformmassen mit wasserhaltigen Flüssigfarben geeigneten Anlage, ohne dass hierdurch eine Beschränkung erfolgen soll.

Die in Figur 1 dargestellte Anlage zur Einfärbung von Kunststoffformmassen umfasst einen Extruder 1, in den über eine Einspeisungsstelle 2 eine Polymerzusammensetzung eingeleitet wird, die Monomerreste aus einer kontinuierlich betriebenen Polymerisations umfasst. Diese Monomerreste können dem Extruder 1 über Entgasungszonen EZ1, 3a, 3b und 3c entnommen werden. In der vorliegenden Ausführungsform wird die im Extruder befindliche Zusammensetzung bei unterschiedlichen Drücken entgast, wobei die Entgasungszone 3c vorliegend unter Vakuum betrieben wird. Nach der Entgasungszone 3c weist der Extruder 1 eine Einspeisungsstelle 4 für eine wasserhaltige Flüssigfarbe auf. Im vorliegenden Extruder 1 ist eine weitere Zuleitung 5 vorgesehen, über die beispielsweise weitere Additive, wie z.B. Stabilisatoren und/oder Entformungsmittel, der Formmasse zugeführt werden können. Die Schmelze wird dem Extruder vorliegend über ein beheiztes Schmelzerohr 6 entnommen und über einem Siebwechsler (nicht abgebildet) einem Stranggießer (nicht abgebildet) zugeführt.

Die Einspeisungsstelle 4 im Extruderzylinder ist vorliegend in Form einer von unten kommenden Bohrung ohne Gewinde ausgebildet. Das Injektionsventil 7 wird mit einem auf dem Zylinder aufgeschraubten Metallblock mit dem Extruder verbunden, so dass die Ventilspitze bündig mit der Innenwand des Zylinders abschließt. Hierdurch kann eine Totraum-freie Dosierung erzielt werden.

Das Injektionsventil 7 umfasst vorliegend einen Ringspalt, über den eine wasserhaltige Flüssigfarbe in den Extruder 1 eingeleitet werden kann. Die Breite des Ringspalts kann in der vorliegenden Ausführungsform eingestellt werden. Das Injektionsventil 7 ist mit einer Zuleitung 8 verbunden, über die die wasserhaltige Flüssigfarbe dem Injektionsventil 7 zugeführt wird. In der Zuleitung 8 ist ein Sicherungsventil 9 vorgesehen. Der Druck der wasserhaltigen Flüssigfarbe in der Zuleitung 8 wird vorliegend über eine erste Pumpe 10 aufgebaut. In der vorliegenden Anlage kann die Menge an Flüssigfarbe über eine Regelung präzise gesteuert werden. Die Regelung erfasst den Massenstrom über ein Massendurchflussmessgerät 13 (das sowohl wie abgebildet saugseitig der Pumpe 10 wie auch bei hinreichend druckfester Auslegung druckseitig der Pumpe 10 in die Leitung 8 eingebaut sein kann) und regelt die Drehzahl des Pumpenantriebs 11 so, dass eine vorgegebene Dosiermenge eingehalten wird. Weiterhin wird der Dosierdruck druckseitig der Pumpe 10 von einem Drucksensor 12b erfasst. Bei Abweichung von bestimmten Druckvorgaben wird das Injektionsventil 7 geschlossen oder die Drehzahl des Pumpenantriebs 11 verändert. Weiterhin wird der Vordruck saugseitig der Pumpe 10 von einem Drucksensor 12c erfasst. Er gibt den Druck nach den Filtereinheiten 16a bzw. 16b wieder. Bei unterschreiten eines vorgegebenen Wertes ist die verwendete Filtereinheit belegt. Es muss dann auf die andere Filtereinheit umgeschaltet werden und die belegte Filtereinheit muss getauscht oder gereinigt werden. Darüber hinaus weist die vorliegende Anlage eine zweite Pumpe 14 auf, die die wasserhaltige Flüssigfarbe aus einem Vorratsbehälter 15 in den Ansaugbereich der ersten Pumpe 10 befördert. Der

Vorratsbehälter kann mit einem Rührwerk ausgestattet sein, um Sedimentation zu vermeiden. Es können auch zwei Vorlagebehälter verwendet werden, die wechselwelse betrieben werden. Im Bereich zwischen der zweiten Pumpe 14 und dem Durchflussmessgerät 13 sind vorliegend die zwei umschaltbaren Filtereinheiten 16a und 16b vorgesehen.

Gemäß einer bevorzugten Ausgestaltung des erfindungsgemäßen Verfahrens wird die wasserhaltige Flüssigfarbe unter Druck in den Extruder eingeleitet. Vorzugsweise kann der Druck, mit dem die wasserhaltige Flüssigfarbe in den Extruder eingespeist wird, im Bereich von 0,1 bis 200 bar (Überdruck), besonders bevorzugt im Bereich von 5 bis 70 bar (Überdruck) und ganz besonders bevorzugt im Bereich von 10 bis 50 bar (Überdruck) liegen. Der Druck kann insbesondere mit einem Drucksensor gemessen werden, der in der Zuleitung für die Flüssigfarbe vor dem Injektionsventil 7 und nach der ersten Pumpe vorgesehen ist.

Von besonderem Interesse sind Verfahren, bei denen die Differenz zwischen dem Druck, der im Extruder im Bereich der Einspeisungsstelle der Flüssigfarbe herrscht, und dem Druck, mit dem die Flüssigfarbe eingeleitet wird, im Bereich von 0,1 bis 100 bar, besonders bevorzugt im Bereich von 5 bis 50 bar liegt. Der Druck im Extruder im Bereich der Einspeisungsstelle kann mit einem an dieser Stelle vorgesehenen Drucksensor gemessen werden.

Der Druck im Extruder im Bereich der Einspeisungsstelle kann beispielsweise im Bereich von 200 mbar bis 10 bar, vorzugsweise im Bereich von 0,8 bar bis 3 bar (absolut) liegen.

Vorzugsweise liegt die Temperatur der Formmasse an der Einspeisungsstelle im Bereich von 180 bis 330 °C, besonders bevorzugt im Bereich von 220 bis 285 °C. Die Temperatur bezieht sich hierbei auf die Temperatur des Extruderzylinders und kann mittels eines Thermoelements, z. Bsp. FeCuNi Typ L oder Typ J, eines PT 100 Thermometers oder eines IR-Thermometers gemessen werden.

Überraschende Vorteile können insbesondere dadurch erzielt werden, dass die Temperatur und Druck an der Einspeisungsstelle Werte aufweisen, bei denen Wasser im Gleichgewichtszustand gasförmig ist. Diese Werte beziehen sich auf den Druck und die Temperatur im Extruder. Durch diese Maßnahme kann insbesondere ein unterbrechungsfreier Betrieb der Anlage über eine äußerst lange Zeit erzielt werden.

Erfindungsgemäß wird eine eingefärbte Formmasse hergestellt, wobei eine Kunststoffformmasse mit einer wasserhaltigen Flüssigfarbe eingefärbt wird. Das Gewichtsverhältnis von wasserhaltiger Flüssigfarbe zu Kunststoffformmasse kann in einem weiten Bereich liegen. Vorzugweise kann das Gewichtsverhältnis von wasserhaltiger Flüssigfarbe zu Kunststoffformmasse im Bereich von 10 zu 100 bis 0,001 zu 100, besonders bevorzugt von 2 zu 100 bis 0,01 zu 100 liegen. Dieses Verhältnis bezieht sich auf das Gewicht Kunststoffformmasse im Bereich der Einspeisungsstelle, wobei dieses Verhältnis aus den Stoffströmen abgeleitet Werden kann.

Nachfolgend soll die vorliegende Erfindung anhand von Beispielen erläutert werden, ohne dass hierdurch eine Beschränkung erfolgen soll.

### Beispiel 1

In einer Anlage gemäß Figur 1 wurden in einen Einschneckenextruder über einen Zeitraum von 6 Tagen 216t eine Polymermischung zugeführt, die 108t PMMA-Polymer sowie nicht umgesetztes Monomer enthielt. Die ersten drei Entgasungszonen wurden bei Atmosphärendruck betrieben, die Vierte bei einem Druck von 200 mbar (absolut). Die aus den Entgasungszonen gewonnenen Monomere wurden kondensiert und zur Herstellung von Polymethylmethacrylat verwendet.

Als Injektionsventil wurde ein Einspritzventil mit Faltenbalg Typ 230 DN2, PN 400 der Firma Phoenix eingesetzt. Der Druck innerhalb des Extruders bei der Einspeisungsstelle entsprach in etwa dem Atmosphärendruck, wobei die Temperatur ca. 260° C betrug. An der Einleitungsstelle wurden 750 kg pro Stunde Formmasse durchgeleitet. An der Einspeisungsstelle wurden 535 g pro Stunde wasserhaltige Flüssigfarbe mit einem Druck von 20 bar zugeführt. Als wasserhaltige Flüssigfarbe wurde eine Zusammensetzung eingesetzt, die 20 Gew.-% Polyacrylat als Dispergiermittel (kommerziell von Ciba Specialty Chemicals erhältlich unter der Handelsbezeichnung EFKA^{®} 4550), 39,33 Gew.-% vollentsalztes Wasser, 0,6 Gew.-% Entschäumer (kommerziell von BYK Additives and Instruments erhältlich unter der Handelsbezeichnung Byk^{®} 024; Entschäumer auf Basis von Polysiloxanen), 31,74 Gew.-% Thermoplastrot^{®} 454 und 8,26 Gew.-% Macrolexgelb^{®} G und 0,07 Gew.-% Antifäulnismittel (Ebotec^{®} MT 15) enthielt.

Die Steuerung der Zuführung erfolgte mit der in Figur 1 dargelegten Anordnung, wobei eine von der Fa. Lewa unter der Bezeichnung FCMk 1 erhältliche Hochdruckpumpe (Pumpe 10) und eine von der Fa. Almatec unter der Bezeichnung Typ A 08 UTT erhältliche mit Druckluft betriebene Membranpumpe (Pumpe 14) eingesetzt wurde. Die Maschenweite der Filter betrug 50 µm. Als Drucksensoren wurden IS10 eingesetzt, die von der Fa. Wika erhältlich sind. Der Durchfluss in Leitung 8 wurde mit einem Coriolis-Durchflussmesser bestimmt, der von der Fa. Endress+Hauser unter der Bezeichnung Promass 83F erhältlich ist.

Die Anlage konnte ohne Unterbrechung über einen Zeitraum von 6 Tagen betrieben werden, ohne dass Störungen auftraten. Die eingefärbte Formmasse zeigte eine hervorragende Farbverteilung, die innerhalb sehr enger Farbspezifikationen blieb.

Zur Beschreibung der Farbe wurde das Normvalenz-System (DIN 5033, Teil 3) mit x-, y- Koordinaten und Lichttransmission verwendet, wobei die Bestimmung dieser Werte nach DIN 5033, Teil 4 und 7 erfolgte.

Übliche Spezifikationen der eingefärbten Formmasse sehen eine X-Koordinate im Bereich von 0,6722 bis 0,6764, eine Y-Koordinate im Bereich von 0,3228 bis 0,3265 und eine Transmission im Bereich von 25,2 bis 27,2 % vor.

Über die gesamte Produktionszeit wurden in konstanten Zeitabständen ca. 110 Proben genommen. Der maximale Wert der X-Koordinate betrug ca. 0,6750, der minimale Wert ca. 0,6732. Der maximale Wert der Y-Koordinate betrug ca. 0,3254, der minimale Wert ca. 0,3238. Der maximale Wert der Transmission betrug ca. 26,5 %, der minimale Wert ca. 25,6%.

Die dargelegten Werte zeigen, dass der vorgesehenen Spezifikation nicht nur genüge getan werden konnte. Vielmehr konnte eine wesentlich engere Vorgabe eingehalten werden. Dementsprechend können durch das vorliegende Verfahren sehr rigide Farbvorgaben erfüllt werden, welche durch herkömmliche Verfahren kaum erzielt werden können.

## Patentansprüche

1. Verfahren zur Herstellung von eingefärbten Kunststoffformmassen mit wasserhaltigen Flüssigfarben, wobei eine wasserhaltige Flüssigfarbe zu einer geschmolzenen Kunststoffformmasse in einem Extruder (1) mit einer oder mehreren Entgasungszonen (EZ1, 3a, 3b, 3c) nach einer Entgasungszone gegeben wird, wobei die Kunststoffformmasse, falls der Extruder mehrere Entgasungszonen aufweist, nach der letzten Entgasungszone mit der wasserhaltigen Flüssigfarbe versetzt wird.

2. Verfahren gemäß Anspruch 1, **dadurch gekennzeichnet, dass** die Kunststoffformmasse Poly(meth)acrylate umfasst.

3. Verfahren gemäß Anspruch 1 oder 2, **dadurch gekennzeichnet, dass** die wasserhaltige Flüssigfarbe 0,5 Gew-% bis 50 Gew.-% Farbmittel umfasst.

4. Verfahren gemäß mindestens einem der vorhergehenden Ansprüche, **dadurch gekennzeichnet, dass** die wasserhaltige Flüssigfarbe zwischen 5 Gew.-% und 50 Gew.-% Dispergiermittel, bezogen auf das Gesamtgewicht der wasserhaltigen Flüssigfarbe umfasst.

5. Verfahren gemäß mindestens einem der vorhergehenden Ansprüche, **dadurch gekennzeichnet, dass** in der wasserhaltigen Flüssigfarbe als Dispergiermittel ein Polyacrylat mit hydrophilen oder ionischen Gruppen eingesetzt wird.

6. Verfahren gemäß mindestens einem der vorhergehenden Ansprüche, **dadurch gekennzeichnet, dass** das Gew.-% Verhältnis von Wasser zu Dispergiermittel im Bereich von 2:1 bis 1:2 liegt.

7. Verfahren gemäß mindestens einem der vorhergehenden Ansprüche, **dadurch gekennzeichnet, dass** die wasserhaltige Flüssigfarbe unter Druck in die geschmolzene Kunststoffformmasse eingeleitet wird.

8. Verfahren gemäß mindestens einem der vorhergehenden Ansprüche, **dadurch gekennzeichnet, dass** der Druck, mit dem die wasserhaltige Flüssigfarbe eingeleitet wird, im Bereich von 0,1 bis 200 bar (Überdruck) liegt.

9. Verfahren gemäß mindestens einem der vorhergehenden Ansprüche, **dadurch gekennzeichnet, dass** die Differenz zwischen dem Druck, der im Extruder (1) im Bereich der Einleitung der wasserhaltigen Flüssigfarbe herrscht, und dem Druck, mit dem die wasserhaltige Flüssigfarbe eingeleitet wird, im Bereich von 0,1 bis 100 bar liegt.

10. Verfahren gemäß mindestens einem der vorhergehenden Ansprüche, **dadurch gekennzeichnet, dass** die Temperatur der Formmasse an der Einspeisungsstelle (4) im Bereich von 180 bis 330°C liegt.

11. Verfahren gemäß mindestens einem der vorhergehenden Ansprüche, **dadurch gekennzeichnet, dass** die Temperatur und Druck an der Einspeisungsstelle (4) Werte aufweisen, bei denen Wasser im Gleichgewichtszustand gasförmig ist.

12. Verfahren gemäß mindestens einem der vorhergehenden Ansprüche, **dadurch gekennzeichnet, dass** das Gewichtsverhältnis von wasserhaltiger Flüssigfarbe zu Formmasse im Bereich von 1:10 bis 0,0001:10 liegt.

13. Verfahren gemäß mindestens einem der vorhergehenden Ansprüche, **dadurch gekennzeichnet, dass** die Formmasse über ein Verfahren der kontinuierlichen Polymerisation in einem Extruder hergestellt oder aufgearbeitet wird.

## Claims

1. Process for producing coloured plastics moulding compositions with aqueous liquid colours, where an aqueous liquid colour is added to a molten plastics moulding composition after a vent zone in an extruder (1) having one or more vent zones (EZ1, 3a, 3b, 3c), and in the event that the extruder has a plurality of vent zones the aqueous liquid colour is admixed with the plastics moulding composition after the final vent zone.

2. Process according to Claim 1, **characterized in that** the plastics moulding composition comprises poly(meth)acrylates.

3. Process according to Claim 1 or 2, **characterized in that** the aqueous liquid colour comprises from 0.5% by weight to 50% by weight of colorant.

4. Process according to at least one of the preceding claims, **characterized in that** the aqueous liquid colour comprises between 5% by weight and 50% by weight of dispersing agent, based on the total weight of the aqueous liquid colour.

5. Process according to at least one of the preceding claims, **characterized in that** a polyacrylate having hydrophilic or ionic groups is used as dispersing agent in the aqueous liquid colour.

6. Process according to at least one of the preceding claims, **characterized in that** the ratio of % by weight of water to that of dispersing agent is in the range from 2:1 to 1:2.

7. Process according to at least one of the preceding claims, **characterized in that** the aqueous liquid colour is introduced under pressure into the molten plastics moulding composition.

8. Process according to at least one of the preceding claims, **characterized in that** the pressure with which the aqueous liquid colour is introduced is in the range from 0.1 to 200 bar (gauge pressure).

9. Process according to at least one of the preceding claims, **characterized in that** the difference between the pressure prevailing in the extruder (1) in the region of introduction of the aqueous liquid colour and the pressure with which the aqueous liquid colour is introduced is in the range from 0.1 to 100 bar.

10. Process according to at least one of the preceding claims, **characterized in that** the temperature of the moulding composition at the feed site (4) is in the range from 180 to 330°C.

11. Process according to at least one of the preceding claims, **characterized in that** the values for the temperature and pressure at the feed site (4) are such that the equilibrium state of water is gaseous.

12. Process according to at least one of the preceding claims, **characterized in that** the ratio by weight of aqueous liquid colour to moulding composition is in the range from 1:10 to 0.0001:10.

13. Process according to at least one of the preceding claims, **characterized in that** the moulding composition is produced or treated by way of a process of continuous polymerization in an extruder.

## Revendications

1. Procédé de fabrication de matériaux de moulage en plastique colorés avec des colorants liquides contenant de l'eau, un colorant liquide contenant de l'eau étant ajouté à un matériau de moulage en plastique fondu dans une extrudeuse (1) comprenant une ou plusieurs zones de dégazage (EZ1, 3a, 3b, 3c) après une zone de dégazage, le matériau de moulage en plastique étant mélangé avec le colorant liquide contenant de l'eau après la dernière zone de dégazage si l'extrudeuse comprend plusieurs zones de dégazage.

2. Procédé selon la revendication 1, **caractérisé en ce que** le matériau de moulage en plastique comprend des poly(méth)acrylates.

3. Procédé selon la revendication 1 ou 2, **caractérisé en ce que** le colorant liquide contenant de l'eau comprend 0,5 % en poids à 50 % en poids de colorant.

4. Procédé selon au moins l'une quelconque des revendications précédentes, **caractérisé en ce que** le colorant liquide contenant de l'eau comprend entre 5 % en poids et 50 % en poids de dispersant, par rapport au poids total du colorant liquide contenant de l'eau.

5. Procédé selon au moins l'une quelconque des revendications précédentes, **caractérisé en ce qu'**un polyacrylate à groupes hydrophiles ou ioniques est utilisé dans le colorant liquide contenant de l'eau en tant que dispersant.

6. Procédé selon au moins l'une quelconque des revendications précédentes, **caractérisé en ce que** le rapport en % en poids entre l'eau et le dispersant se situe dans la plage allant de 2:1 à 1:2.

7. Procédé selon au moins l'une quelconque des revendications précédentes, **caractérisé en ce que** le colorant liquide contenant de l'eau est introduit sous pression dans le matériau de moulage en plastique fondu.

8. Procédé selon au moins l'une quelconque des revendications précédentes, **caractérisé en ce que** la pression avec laquelle le colorant liquide contenant de l'eau est introduit se situe dans la plage allant de 0,1 à 200 bar (surpression).

9. Procédé selon au moins l'une quelconque des revendications précédentes, **caractérisé en ce que** la différence entre la pression qui règne dans l'extrudeuse (1) dans la zone de l'introduction du colorant liquide contenant de l'eau et la pression avec laquelle le colorant liquide contenant de l'eau est introduit se situe dans la plage allant de 0,1 à 100 bar.

10. Procédé selon au moins l'une quelconque des revendications précédentes, **caractérisé en ce que** la température du matériau de moulage à l'emplacement d'introduction (4) se situe dans la plage allant de 180 à 330 °C.

11. Procédé selon au moins l'une quelconque des revendications précédentes, **caractérisé en ce que** la température et la pression à l'emplacement d'introduction (4) présentent des valeurs auxquelles l'eau est gazeuse à l'état d'équilibre.

12. Procédé selon au moins l'une quelconque des revendications précédentes, **caractérisé en ce que** le rapport en poids entre le colorant liquide contenant de l'eau et le matériau de moulage se situe dans la plage allant de 1:10 à 0,0001:10.

13. Procédé selon au moins l'une quelconque des revendications précédentes, **caractérisé en ce que** le matériau de moulage est fabriqué ou traité dans une extrudeuse par un procédé de polymérisation continue.
